# FASCICULE DE BREVET EUROPEEN

(11) **EP 2 778 364 B1**
(45) Date de publication et mention de la délivrance du brevet: **14.10.2015**
(21) Numéro de dépôt: 13305281.1
(22) Date de dépôt: 13.03.2013
(51) Int. Cl.: F01P 3/06, F01L 9/02, F16K 31/122

(54) **Dispositif de commande de l'alimentation d'un système avec un fluide**
Steuervorrichtung der Einspeisung einer Flüssigkeit in ein System
Device for controlling the power supply of a system with a fluid

(43) Date de publication de la demande: 17.09.2014
(73) Titulaire: BONTAZ CENTRE R & D, 74460 Marnaz (FR)
(72) Inventeur: Perotto, Stéphane Pascal, 74130 Ayze (FR); Salomon, Cyrille Yves, 74300 St Sigismond (FR); Taupeau, Anthony Raymond Arthur, 74330 Poisy (FR)
(74) Mandataire: Ilgart, Jean-Christophe

(56) Documents cités:
- JP-A- 2001 280 109
- US-A- 4 114 571
- US-A- 5 522 358

## Description

### DOMAINE TECHNIQUE ET ART ANTÉRIEUR

La présente invention se rapporte à un dispositif de commande de l'alimentation d'un système avec un fluide, par exemple de l'alimentation de gicleurs de refroidissement des pistons d'un moteur à combustion interne avec de l'huile.

Le document FR 2 935 771 décrit un dispositif de commande de l'alimentation d'un système avec un fluide, notamment mis en oeuvre pour l'alimentation de gicleurs de refroidissement de pistons d'un moteur à combustion interne, comportant un clapet muni d'un obturateur, l'ouverture du clapet étant commandée par une valeur de pression du fluide au-delà d'une valeur minimale de pression et la fermeture du clapet est commandée soit par une baisse de la pression en dessous de la valeur minimale, soit par l'injection du fluide sous pression sur une face de l'obturateur de sorte à provoquer la fermeture du clapet. Cette injection est commandée par une électrovanne. Pour acheminer le fluide sous pression en contact sur la deuxième face de l'obturateur, un canal secondaire est réalisé dans le carter. Un évent relié à la pression atmosphérique est requis au niveau de l'obturateur pour éviter l'apparition d'une pression s'opposant à l'ouverture de l'obturateur.

Ce dispositif donne entière satisfaction. La réduction des coûts de revient et une simplification des systèmes sont recherchées, en particulier dans le domaine automobile.

### EXPOSÉ DE L'INVENTION

C'est par conséquent le but de la présente invention d'offrir un dispositif de commande de l'alimentation d'un système avec un fluide, de réalisation simplifiée et offrant un coût de revient réduit par rapport aux dispositifs de commande de l'état de la technique.

Le but précédemment énoncé est atteint par un dispositif de commande comportant une entrée d'alimentation en fluide sous pression, une sortie d'évacuation vers le système à alimenter avec du fluide, un conduit principal entre l'entrée d'alimentation et la sortie d'évacuation, un obturateur mobile interposé entre l'entrée et la sortie et apte à interrompre ou autoriser la communication entre l'entrée et la sortie par le conduit principal, un canal secondaire reliant l'entrée d'alimentation et la sortie d'évacuation, des moyens d'obturation disposés dans le conduit secondaire aptes à obturer sur commande ledit conduit secondaire, l'obturateur mobile délimitant dans le conduit secondaire avec les moyens d'obturation une chambre de pilotage qui est en permanence en communication fluidique avec l'entrée d'alimentation. Lorsque les moyens d'obturation obturent l'écoulement dans le canal secondaire, le fluide applique un effort sur l'obturateur mobile de sorte qu'il obture le conduit principal. Lorsque les moyens d'obturation autorisent l'écoulement dans le canal secondaire, l'obturateur se déplace de sorte à autoriser l'écoulement dans le canal principal.

En d'autres termes, on réalise un dispositif de commande dans lequel on utilise la pression du fluide pour assister la commande, ce qui permet de réduire de manière sensible la taille de l'actionneur des moyens d'obturation. On peut mettre en oeuvre un obturateur de taille importante, notamment de section importante et/ou se déplaçant sur une course importante en utilisant un actionneur pour les moyens d'obturation de petite taille, par exemple une électrovanne de petite taille.

En outre, ce dispositif est simplifié puisqu'il ne requiert pas d'évent relié à la pression atmosphérique.

La commande des moyens obturateurs montés dans le canal secondaire peut être en tout ou rien ou proportionnel permettant alors une ouverture, une fermeture partielle du canal secondaire pour obtenir des positions d'ouverture et de fermeture partielles du dispositif de commande et donc une alimentation modulée des gicleurs ou de tout autre dispositif alimenté.

La présente invention a alors pour objet un dispositif de commande de l'alimentation d'un système à partir d'une source de fluide sous pression comportant une entrée d'alimentation en fluide sous pression, une sortie d'évacuation du fluide sous pression, un conduit principal reliant l'entrée d'alimentation et la sortie d'évacuation, et des moyens de commande comportant :
- un conduit secondaire reliant l'entrée d'alimentation à la sortie d'évacuation,
- un obturateur mobile apte à interrompre l'écoulement dans le conduit principal, ledit obturateur mobile comportant une première extrémité et une deuxième extrémité, la première extrémité de l'obturateur mobile étant destinée à être soumise à la pression du fluide au niveau de l'entrée d'alimentation, l'obturateur mobile reposant sur un siège de clapet par sa première extrémité dans un état d'interruption de la communication entre l'entrée d'alimentation et la sortie d'évacuation,
- des moyens d'obturation aptes à interrompre l'écoulement dans le conduit secondaire,
- une chambre de pilotage délimitée par la deuxième extrémité de l'obturateur mobile et les moyens d'obturation,
- une communication permanente entre la chambre de pilotage et l'entrée d'alimentation,
les surfaces des première et deuxième extrémités de l'obturateur mobile sur lesquelles s'appliquent le fluide sous pression et la section de passage de la deuxième portion du conduit secondaire sont telles que, dans un état de fermeture des moyens d'obturation, l'obturateur mobile est maintenu en appui sur son siège de clapet de sorte à interrompre la circulation du fluide entre l'entrée d'alimentation et la sortie d'évacuation, et, dans un état d'ouverture des moyens d'obturation, l'obturateur mobile est écarté de son siège de clapet autorisant l'écoulement entre l'entrée d'alimentation et la sortie d'évacuation.

Par exemple, l'obturateur mobile comporte un passage traversant reliant sa première extrémité à sa deuxième extrémité assurant la communication permanente entre la chambre de pilotage et l'entrée d'alimentation.

Les moyens obturateurs peuvent comporter par exemple un élément d'obturation et un actionneur déplaçant ledit élément d'obturation entre une position fermée et une position ouverte et inversement.

L'élément d'obturation peut être un pointeau de commande.

Dans un exemple de réalisation, l'actionneur est un actionneur en tout ou rien.

Dans un autre exemple de réalisation, l'actionneur est un actionneur proportionnel.

De manière avantageuse, les moyens d'obturation sont formés par une électrovanne.

La présente invention a également pour objet un système de refroidissement d'au moins un piston d'un moteur à combustion interne comportant au moins un dispositif de commande selon la présente invention, l'entrée d'alimentation du dispositif de commande étant connectée à une source d'huile sous pression et la sortie d'évacuation étant connectée à au moins un gicleur de refroidissement.

### BRÈVE DESCRIPTION DES DESSINS

La présente invention sera mieux comprise à l'aide de la description qui va suivre et des dessins en annexe sur lesquels :
- la figure 1 est une vue en coupe schématique d'un dispositif de commande selon un exemple de réalisation dans une position de non alimentation des gicleurs,
- la figure 2 est une vue en coupe schématique du dispositif la figure 1 dans une position intermédiaire en vue de l'alimentation des gicleurs,
- la figure 3 est une vue en coupe schématique du dispositif de la figure 1 dans une position d'alimentation des gicleurs,
- la figure 4, est une vue en coupe schématique du dispositif de la figure 1 dans une position en vue de l'interruption de l'alimentation des gicleurs.

### EXPOSÉ DÉTAILLÉ DE MODES DE RÉALISATION PARTICULIERS

Dans la description qui va suivre, le dispositif de commande sera appliqué à l'alimentation des gicleurs de refroidissement de pistons d'un moteur à combustion interne. Cependant la présente invention s'applique à tous les domaines utilisant des fluides et nécessitant une commande de leur alimentation. En outre, nous utiliserons, à des fins de simplification, le terme « huile » pour désigner le fluide circulant à travers le dispositif de commande, mais il sera compris que la présente invention ne se limite pas à l'alimentation d'huile que tout autre fluide peut être mis en oeuvre.

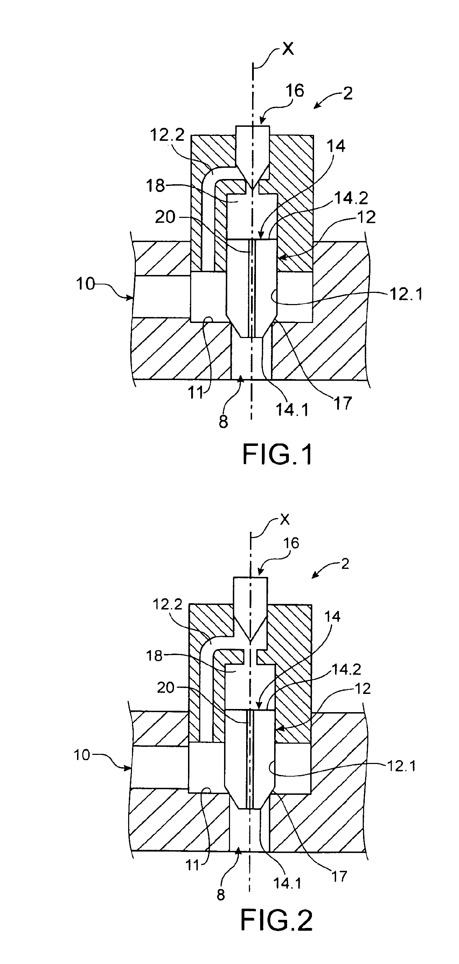

Le dispositif de commande 2 représenté sur les figures 1 à 4 est destiné par exemple à être disposé entre une source d'huile sous pression et au moins un gicleur de refroidissement, la source de pression du gicleur d'huile étant représenté de manière schématique. Le gicleur de refroidissement est destiné à projeter de l'huile contre le fond des pistons (non représenté) d'un moteur à combustion interne. Le dispositif de commande 2 contrôle l'alimentation en huile sous pression de un ou plusieurs gicleurs.

Dans le cas de la commande de l'alimentation en huile des gicleurs, le dispositif de commande est destiné à être fixé sur le carter moteur.

Le dispositif de commande comporte une entrée d'alimentation 8, désignée par la suite entrée, et une sortie d'évacuation 10, désignée par la suite sortie. L'entrée 8 est destinée à être connectée à la source d'huile sous pression (non représentée), par exemple une pompe à huile, et la sortie 10 est destinée à être connectée à au moins un gicleur de refroidissement (non représenté) L'entrée 8 et la sortie 10 sont reliées par un conduit principal 11.

Le dispositif de commande comporte en outre, interposés entre 8 et la sortie 10, des moyens de commande de la communication fluidique entre l'entrée 8 et la sortie 10.

Les moyens de commande sont disposés dans le conduit principal 11 entre l'entrée 8 et la sortie 10 de sorte à commander la communication entre l'entrée 8 et la sortie 10. Les moyens de commande comportent un conduit secondaire 12 reliant l'entrée 8 et la sortie 10, des moyens d'obturation 16 disposés dans le conduit secondaire 12, délimitant une première portion 12.1 située entre l'entrée 8 et les moyens d'obturation 16 et une deuxième portion 12.2 située entre les moyens d'obturation 16 et la sortie d'évacuation 10.

Les moyens de commande comportent un obturateur mobile 14 en translation dans la première portion 12.1, l'obturateur mobile 14 étant destiné à reposer sur un siège de clapet 17 bordant l'entrée 8. L'obturateur mobile 14 présente un axe longitudinal X et est mobile le long de son axe longitudinal dans la première portion 12.2.

Une chambre de pilotage 18 est ménagée entre l'obturateur mobile 14 et les moyens d'obturation 16.

La chambre de pilotage 18 est en permanence en communication avec l'entrée 8. Dans l'exemple représenté, l'obturateur mobile 14 comporte un passage 20 assurant une communication permanente entre l'entrée 8 et la chambre de pilotage 18. Dans l'exemple représenté, le passage est coaxial à l'axe de l'obturateur mobile 14, mais il pourrait être décalé par rapport à l'axe de l'obturateur.

La deuxième portion 12.2 du conduit secondaire 12 est telle que le débit de la chambre de pilotage 18 vers la sortie 10 est supérieure à celui de l'entrée 8 vers la chambre de pilotage 18. Par exemple, la section de passage de la deuxième portion 12.2 du conduit secondaire 12 est supérieure à celle du passage à travers l'obturateur mobile 14.

Les moyens d'obturation 16 sont, dans l'exemple représenté, formés par un pointeau de commande déplaçable en translation par un actionneur. Les moyens d'obturation peuvent par exemple être formés par une électrovanne. Tous les moyens permettant d'interrompre ou d'autoriser l'écoulement sur commande peuvent être mis en oeuvre. Par exemple on peu envisager de mettre en oeuvre un clapet actionné par un actionneur piézoélectrique ou pneumatique. Dans d'autres applications, des moyens d'obturation à commande manuelle peuvent être envisagés.

L'obturateur mobile 14 comporte une première extrémité 14.1 longitudinale soumise à la pression du fluide à l'entrée 8, et une deuxième extrémité longitudinale 14.2 soumise à la pression du fluide dans la chambre de pilotage 18. La surface de la deuxième extrémité longitudinale 14.2 voyant l'huile sous pression est supérieure à la surface de la première extrémité longitudinale 14.1 voyant le fluide sous pression de sorte que, lorsque la même pression règne à l'entrée 8 et dans la chambre de pilotage 18 l'obturateur mobile 14 est repoussée contre son siège 17 et interrompt la communication entre l'entrée 8 et la sortie 10.

Dans l'exemple représenté, la première extrémité 14.1 a une forme tronconique, et la surface de la première extrémité 14.1 de l'obturateur voyant le fluide lorsque l'obturateur est écarté de son siège est la même surface que celle de la deuxième extrémité de l'obturateur. Cependant, du fait de l'écoulement de l'huile et des pertes de charge, la pression dans le conduit principal 11 est inférieure à celle dans la chambre de pilotage 18 qui est à la pression de l'entrée 8. Une obturateur ayant une autre forme ne sort pas duc cadre de la présente invention.

Le fonctionnement du dispositif de commande selon l'invention va maintenant être décrit.

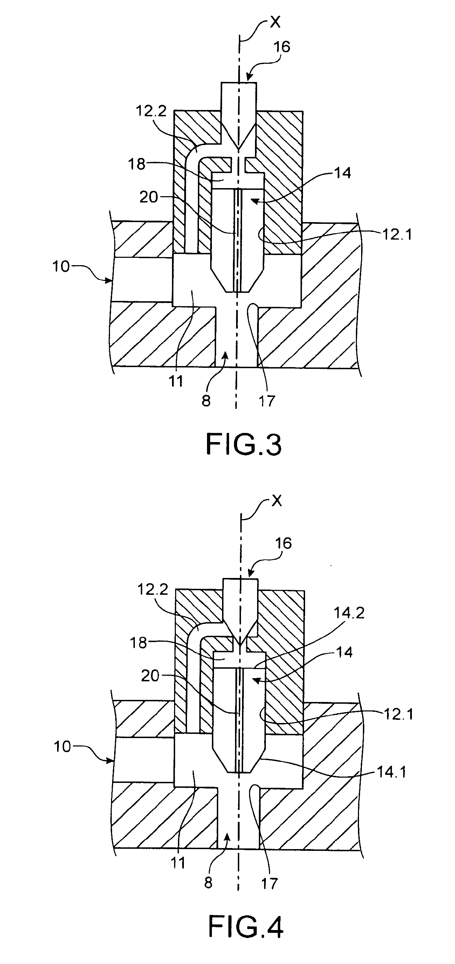

Dans l'application à l'alimentation de gicleurs de refroidissement, le dispositif de commande est normalement ouvert (état représenté sur la figure 3), autorisant une alimentation des gicleurs. Pour d'autres applications, il peut être dans un état normalement fermé, l'alimentation étant interrompu.

Dans une position d'interruption de l'alimentation telle que représentée sur la figure 1, le pointeau 16 interrompt l'écoulement de la chambre de pilotage 18 vers la deuxième portion 12.2 du conduit secondaire 12. Du fait de la communication permanente entre l'entrée 8 et la chambre de pilotage 18 et l'état fermé du pointeau, la pression d'huile dans la chambre de pilotage 18 est égale à la pression d'huile à l'entrée 8. La surface de la deuxième extrémité longitudinale 14.2 de l'obturateur mobile 14 sur laquelle s'applique l'huile de la chambre de pilotage 18 étant supérieure à la surface de la première extrémité longitudinale 14.1 de l'obturateur mobile 14 sur laquelle s'applique l'huile à l'entrée 8, la force exercée par l'huile dans la chambre de pilotage 18 sur l'obturateur mobile 14 plaque l'obturateur mobile 14 sur le siège de clapet 17. La communication entre l'entrée 8 et la sortie 10 est donc interrompue. Les gicleurs ne sont pas alimentés en huile.

Lorsqu'on souhaite alimenter le gicleur de refroidissement en huile, le pointeau de commande est coulissé de sorte à permettre une communication entre la chambre de pilotage 18 et la deuxième portion 12.2 du conduit secondaire (figure 2). Cette communication provoque un écoulement du fluide contenu dans la chambre de pilotage vers la sortie 10 par la deuxième portion 12.2. Par ailleurs, le débit à travers la deuxième portion 12.2 est supérieur à celui de l'entrée 8 dans la chambre de pilotage 18, la pression dans la chambre de pilotage 18 diminue du fait de l'écoulement à travers la deuxième portion 12.2 en direction de la sortie d'évacuation 10, et donc la pression diminue passant de la pression d'entrée à la pression de sortie. La pression d'huile au niveau de l'entrée d'alimentation 8 s'appliquant sur la première extrémité du l'obturateur mobile est alors supérieure à celle s'appliquant sur la deuxième extrémité de l'obturateur mobile 14 dans la chambre de pilotage 18 et est telle que la force appliquée sur la première extrémité longitudinale 14.1 de l'obturateur mobile 14 par l'huile sous pression est supérieure à celle appliquée sur la deuxième extrémité longitudinale 14.2 de l'obturateur mobile 14 par l'huile contenue dans la chambre de pilotage 18, l'obturateur mobile 14 coulisse alors dans la première zone 12.1 du conduit secondaire 12 dans un sens de diminution du volume de la chambre de pilotage 18. L'obturateur mobile s'écarte du siège de clapet 17 du fait de la pression dynamique et de la pression statique, permettant alors un écoulement de l'huile de l'entrée d'alimentation 8 vers la sortie d'alimentation 10 par le conduit principal 11 (figure 3).

Lorsqu'il est décidé d'interrompre l'alimentation des gicleurs en huile, le pointeau de commande est coulissé de sorte à venir interrompre à nouveau la communication entre la première portion 12.1 et la deuxième portion 12.2 du conduit secondaire 12 (figure 4). La chambre de pilotage 18 est toujours alimentée en huile par le passage à travers l'obturateur mobile 14, mais l'huile n'est plus évacuée par la deuxième portion 12.2. La pression dans la chambre de pilotage 18 augmente jusqu'à atteindre la valeur de la pression à l'entrée d'alimentation 8. Du fait de l'écoulement de l'huile et des pertes de charge, la pression dans le conduit principal 11 est inférieure à celle dans la chambre de pilotage 18 qui est à la pression de l'entrée 8, une force s'applique sur l'obturateur mobile 14 en direction de son siège de clapet 17 diminuant ainsi le passage du fluide jusqu'à l'interrompre complètement. L'écoulement entre l'entrée d'alimentation 8 et la sortie d'évacuation 10 est alors à nouveau interrompue (figure 1).

Dans l'exemple décrit, l'ouverture et la fermeture des moyens d'obturation sont en tout ou rien, mais on peut prévoir une ouverture ou une fermeture partielle de la communication entre la chambre de pilotage 18 et la deuxième portion 12.2 du conduit secondaire 12 en prévoyant des moyens d'ouverture proportionnels des moyens d'obturation.

Grâce à l'invention, un obturateur mobile de grande taille et/ou ayant un course importante peut être mis en oeuvre tout en conservant des moyens d'obturation présentant une course et une taille très faible, puisque la commande de l'obturateur est assistée par la pression régnant dans la chambre de pilotage. Le dispositif de commande peut alors présenter une grande compacité.

En outre, le dispositif de commande est de réalisation simplifiée, puisqu'il ne requiert qu'un canal secondaire entre l'entrée d'alimentation et la sortie d'évacuation et ne requiert pas d'évent à la pression atmosphérique. Son coût de revient en est alors réduit.

En outre ce dispositif est très facilement intégrable aux circuits de refroidissement existants.

Le dispositif de commande d'alimentation est particulièrement adapté à la commande de l'alimentation de un ou plusieurs gicleurs de refroidissement de piston pour moteur à combustion interne. Mais il sera compris que le dispositif de commande selon la présente invention peut s'adapter à tous systèmes mettant en oeuvre des fluides et requérant une commande de l'alimentation en fluide.

## Revendications

1. Dispositif de commande de l'alimentation d'un système à partir d'une source de fluide sous pression comportant une entrée d'alimentation (8) en fluide sous pression, une sortie d'évacuation (10) du fluide sous pression, un conduit principal (11) reliant l'entrée d'alimentation (8) et la sortie d'évacuation (10), et des moyens de commande comportant :
- un conduit secondaire (12) reliant l'entrée d'alimentation (8) à la sortie d'évacuation (10),
- un obturateur mobile (14) apte à interrompre l'écoulement dans le conduit principal (11), ledit obturateur mobile (14) comportant une première extrémité (14.1) et une deuxième extrémité (14.2), la première extrémité (14.1) de l'obturateur mobile (14) étant destinée à être soumise à la pression du fluide au niveau de l'entrée d'alimentation (8), l'obturateur mobile (14) reposant sur un siège de clapet (17) par sa première extrémité (14.1) dans un état d'interruption de la communication entre l'entrée d'alimentation (8) et la sortie d'évacuation (10),
- des moyens d'obturation aptes à interrompre l'écoulement dans le conduit secondaire,
- une chambre de pilotage (18) délimitée par la deuxième extrémité (14.2) de l'obturateur mobile (14) et les moyens d'obturation,
- une communication permanente entre la chambre de pilotage (18) et l'entrée d'alimentation (8),
les surfaces des première (14.1) et deuxième (14.2) extrémités de l'obturateur mobile (14) sur lesquelles s'applique le fluide sous pression et la section de passage de la deuxième portion (12.1) du conduit secondaire sont telles que, dans un état de fermeture des moyens d'obturation, l'obturateur mobile (14) est maintenu en appui sur son siège de clapet (17) de sorte à interrompre la circulation du fluide entre l'entrée d'alimentation (8) et la sortie d'évacuation (10), et, dans un état d'ouverture des moyens d'obturation, l'obturateur mobile est écarté de son siège de clapet (17) autorisant l'écoulement entre l'entrée d'alimentation (8) et la sortie d'évacuation (10).

2. Dispositif de commande selon la revendication 1, dans lequel l'obturateur mobile (14) comporte un passage traversant reliant sa première extrémité (14.1) à sa deuxième extrémité (14.2) assurant la communication permanente entre la chambre de pilotage (18) et l'entrée d'alimentation (8).

3. Dispositif de commande selon la revendication 1 ou 2, dans lequel les moyens obturateurs comportent un élément d'obturation et un actionneur déplaçant ledit élément d'obturation entre une position fermée et une position ouverte et inversement.

4. Dispositif de commande selon la revendication 3, dans lequel l'élément d'obturation est un pointeau de commande.

5. Dispositif de commande selon la revendication 3 ou 4, dans lequel l'actionneur est un actionneur en tout ou rien.

6. Dispositif de commande selon la revendication 3 ou 4, dans lequel l'actionneur est un actionneur proportionnel.

7. Dispositif de commande selon l'une des revendications 1 à 6, dans lequel les moyens d'obturation sont formés par une électrovanne.

8. Système de refroidissement d'au moins un piston d'un moteur à combustion interne comportant au moins un dispositif de commande selon l'une des revendications 1 à 7, l'entrée d'alimentation (8) du dispositif de commande étant connectée à une source d'huile sous pression et la sortie d'évacuation (10) étant connectée à au moins un gicleur de refroidissement.

## Patentansprüche

1. Vorrichtung zur Steuerung der Versorgung eines Systems ausgehend von einer Quelle von Fluid unter Druck, umfassend einen Versorgungseingang (8) für Fluid unter Druck, einen Abflussausgang (10) für Fluid unter Druck, eine Hauptleitung (11), die den Versorgungseingang (8) und den Abflussausgang (10) miteinander verbindet, sowie Steuerungsmittel, umfassend:
- eine Sekundärleitung (12), die den Versorgungseingang (8) mit dem Abflussausgang (10) verbindet,
- einen mobilen Verschluss (14), der dazu ausgelegt ist, die Strömung in der Hauptleitung (11) zu unterbrechen, wobei der mobile Verschluss (14) ein erstes Ende (14.1) und ein zweites Ende (14.2) umfasst, wobei das erste Ende (14.1) des mobilen Verschlusses (14) dazu ausgelegt ist, dem Druck des Fluids im Bereich des Versorgungseingangs (8) ausgesetzt zu sein, wobei der mobile Verschluss (14) in einem Zustand der Unterbrechung der Verbindung zwischen dem Versorgungseingang (8) und dem Abflussausgang (10) mit seinem ersten Ende (14.1) auf einem Ventilsitz (17) ruht,
- Verschlussmittel, die dazu ausgelegt sind, die Strömung in der Sekundärleitung zu unterbrechen,
- eine Regulierungskammer (18), die durch das zweite Ende (14.2) des mobilen Verschlusses (14) und die Verschlussmittel begrenzt ist,
- eine permanente Verbindung zwischen der Regulierungskammer (18) und dem Versorgungseingang (8),
wobei die Oberflächen des ersten (14.1) und des zweiten (14.2) Endes des mobilen Verschlusses (14), an denen das Fluid unter Druck anliegt, und der Durchgangsquerschnitt des zweiten Bereichs (12.1) der Sekundärleitung derart sind, dass in einem Schließzustand der Verschlussmittel der mobile Verschluss (14) in Anlage an seinem Ventilsitz (17) derart gehalten ist, dass die Zirkulation des Fluids zwischen dem Versorgungseingang (8) und dem Abflussausgang (10) unterbrochen ist, und dass in einem Öffnungszustand der Verschlussmittel der mobile Verschluss von seinem Ventilsitz (17) beabstandet ist, was eine Strömung zwischen dem Versorgungseingang (8) und dem Abflussausgang (10) ermöglicht.

2. Steuervorrichtung nach Anspruch 1, bei der der mobile Verschluss (14) eine Durchgangspassage umfasst, die sein erstes Ende (14.1) mit seinem zweiten Ende (14.2) verbindet, was die permanente Verbindung zwischen der Regulierungskammer (18) und dem Versorgungseingang (8) sicherstellt.

3. Steuervorrichtung nach Anspruch 1 oder 2, bei der die Verschlussmittel ein Verschlusselement und ein Betätigungselement umfassen, welches das Verschlusselement zwischen einer geschlossenen Position und einer geöffneten Position und umgekehrt verlagert.

4. Steuervorrichtung nach Anspruch 3, bei der das Verschlusselement ein Steuerstift ist.

5. Steuervorrichtung nach Anspruch 3 oder 4, bei der das Betätigungselement ein Ein-Aus-Betätigungselement ist.

6. Steuervorrichtung nach Anspruch 3 oder 4, bei der das Betätigungselement ein Proportional-Betätigungselement ist.

7. Steuervorrichtung nach einem der Anspruch 1 bis 6, bei der die Verschlussmittel durch ein Elektroventil gebildet sind.

8. System zur Kühlung wenigstens eines Kolbens eines Verbrennungsmotors, umfassend wenigstens eine Steuervorrichtung nach einem der Ansprüche 1 bis 7, wobei der Versorgungseingang (8) der Steuervorrichtung an eine Quelle von Öl unter Druck angeschlossen ist und wobei der Abflussausgang (10) an wenigstens eine Kühldüse angeschlossen ist.

## Claims

1. Control device for controlling the supply of a system from a pressurised fluid source comprising a pressurised fluid supply inlet (8), a pressurised fluid evacuation outlet (10), a main duct (11) connecting the supply inlet (8) and the evacuation outlet (10), and control means comprising:
- a secondary duct (12) connecting the supply inlet (8) to the evacuation outlet (10),
- a moving sealing element (14) able to interrupt the flow in the main duct (11), said moving sealing element (14) comprising a first end (14.1) and a second end (14.2), the first end (14.1) of the moving sealing element (14) being intended to be subjected to the pressure of the fluid at the level of the supply inlet (8), the moving sealing element (14) resting on a valve seat (17) by its first end (14.1) in a state of interruption of the communication between the supply inlet (8) and the evacuation outlet (10),
- sealing means able to interrupt the flow in the secondary duct,
- a pilot chamber (18) delimited by the second end (14.2) of the moving sealing element (14) and the sealing means,
- a permanent communication between the pilot chamber (18) and the supply inlet (8),
the surfaces of the first (14.1) and second (14.2) ends of the moving sealing element (14) on which the pressurised fluid applies and the section of passage of the second portion (12.1) of the secondary duct are such that, in a closed state of the sealing means, the moving sealing element (14) is maintained in abutment on its valve seat (17) so as to interrupt the circulation of fluid between the supply inlet (8) and the evacuation outlet (10), and, in an open state of the sealing means, the moving sealing element is moved away from its valve seat (17) enabling flow between the supply inlet (8) and the evacuation outlet (10).

2. Control device according to claim 1, in which the moving sealing element (14) comprises a through passage connecting its first end (14.1) to its second end (14.2) assuring permanent communication between the pilot chamber (18) and the supply inlet (8).

3. Control device according to claim 1 or 2, in which the sealing means comprise a sealing element and an actuator moving said sealing element between a closed position and an open position and vice versa.

4. Control device according to claim 3, in which the sealing element is a control needle valve.

5. Control device according to claim 3 or 4, in which the actuator is an all or nothing actuator.

6. Control device according to claim 3 or 4, in which the actuator is a proportional actuator.

7. Control device according to one of claims 1 to 6, in which the sealing means are formed of an electromagnetic valve.

8. System for cooling at least one piston of an internal combustion engine comprising at least one control device according to one of claims 1 to 7, the supply inlet (8) of the control device being connected to a pressurised oil source and the evacuation outlet (10) being connected to at least one cooling nozzle.
